# FASCICULE DE BREVET EUROPEEN

(11) **EP 2 926 292 B1**
(45) Date de publication et mention de la délivrance du brevet: **02.05.2018**
(21) Numéro de dépôt: 13805808.6
(22) Date de dépôt: 29.11.2013
(51) Int. Cl.: G06K 7/00, G06K 13/08

(54) **TRAPPE POUR TERMINAL**
KLAPPE FÜR ENDGERÄT
FLAP FOR TERMINAL

(30) Priorité: 30.11.2012 FR 1261477
(43) Date de publication de la demande: 07.10.2015
(73) Titulaire: Ingenico Group, 75015 Paris (FR)
(72) Inventeur: JANOT, Cyril, F-26400 Grane (FR); PAVAGEAU, Stéphane, F-26600 La Roche de Glun (FR)
(74) Mandataire: Vidon Brevets & Stratégie
(86) Numéro de dépôt international: PCT/EP2013/075170
(87) Numéro de publication internationale: WO 2014/083185

(56) Documents cités:
- EP-A2- 1 326 194
- DE-A1- 3 822 848
- US-A- 5 661 634
- US-A- 5 933 328
- US-A1- 2002 149 915

## Description

### 1. Domaine de l'invention

L'invention se rapporte à un terminal muni de plusieurs lecteurs de carte à mémoire. L'invention se rapporte plus particulièrement à un terminal muni d'un lecteur de carte à mémoire d'un professionnel et d'un lecteur de carte à mémoire d'un utilisateur. L'invention se rapporte plus particulièrement à un système destiné à permettre l'insertion et le retrait d'une carte à mémoire professionnelle dans un terminal comprenant les deux types de lecteurs susmentionnés.

### 2. Art antérieur

On connaît, dans l'art antérieur, des terminaux qui disposent de deux lecteurs de carte à puce. Il s'agit par exemple de terminaux pour des usages médicaux. Un terminal de ce type comprend par exemple un lecteur de carte à mémoire destiné à recevoir une carte liée à un patient et un lecteur de carte à mémoire destiné à recevoir une carte liée à un professionnel de santé (comme un médecin ou un pharmacien). Ces deux types de cartes n'ont pas la même utilité : la carte professionnelle, liée au professionnel de santé, comprend des données qui sont associées à une profession ou à des actes autorisés tandis que la carte liée au patient permet d'identifier celui-ci.

Dans le même ordre d'idée, des terminaux de paiement bancaire peuvent également être munis de deux lecteurs de carte à mémoire : un premier lecteur est destiné à recevoir une carte de paiement associée à un client tandis qu'un deuxième lecteur est destinée à recevoir une carte professionnelle d'identification liée au commerçant.

D'autres situations où deux lecteurs de carte sont également présents peuvent se présenter et les deux exemples précédents ne sont qu'illustratifs.

Ces situations ont cependant en commun la caractéristique suivante : la carte professionnelle qui est utilisée par le professionnel (médecin, commerçant, etc.) est souvent durablement connectée au terminal en question. Ainsi, par exemple, la carte du commerçant est insérée dans le terminal de manière prolongée (on n'imagine difficilement en effet que le commerçant introduise sa propre carte à chaque fois qu'un paiement doivent être effectué par un client) alors qu'au contraire la carte du client est insérée dans le terminal le temps de la réalisation de la transaction de paiement.

Ainsi, pour prendre en compte ces deux types d'utilisation de carte, deux systèmes différents sont employés : le premier, très traditionnel, consiste à permettre l'insertion et le retrait aisé de la carte dans un lecteur de carte à mémoire (lecteur de carte à puce, lecteur de carte à bande magnétique, lecteur de carte sans contact). Ce premier système est destiné au patient, au client, en d'autres termes à l'utilisateur du service.

Le deuxième système consiste à maintenir durablement la carte du professionnel dans le terminal. Pour ce faire, dans l'état actuel, la carte est insérée dans un lecteur et bloquée dans le terminal, par exemple sous une trappe se situant par exemple sous le lecteur (face postérieure du lecteur). Ainsi, la carte est insérée pour une période prolongée, sans possibilité simple, pour l'utilisateur du service, de procéder discrètement au retrait frauduleux de cette carte professionnelle. En effet, une carte professionnelle comprend souvent des données extrêmement sensibles et le vol d'une telle carte peut avoir des effets désastreux. C'est donc à dessein que la carte professionnelle a été cachée jusqu'à présent par les constructeurs de terminaux. Ce faisant, ils assuraient une plus grande sécurité de la carte.

Bien que cette situation puisse être considérée comme satisfaisante, il s'est posé un problème dans la mesure où, animés d'une volonté de sécuriser un peu plus leurs données, certains professionnels ont pris l'habitude de retirer ces cartes professionnelles du terminal, par exemple en fin de journée ou le week-end. En effet, ces commerçants redoutent, à juste titre par ailleurs, le vol du terminal, et par voie de conséquence, le vol de leur carte professionnelle.

Ces ajouts et retraits quotidiens, qui ne sont pas initialement prévus par les constructeurs de terminaux, posent des problèmes, principalement des problèmes de résistance mécanique et accessoirement des problèmes de sécurité. En effet, l'insertion et le retrait de la carte professionnelle passe par le démontage de la trappe située en face antérieure du terminal. Or cette trappe est généralement fixée au terminal par l'intermédiaire de clips en plastique. Ces clips n'étant pas prévus pour être sollicités plusieurs fois dans la journée, ils finissent par casser et par rendre le terminal inutilisable. L'adaptation de ces clips pour des sollicitations quotidiennes est délicate. Par ailleurs, les ouvertures et les fermetures de cette trappe finissent par déformer le plastique, rendant ainsi le terminal sujet à des attaques, par exemple par l'insertion de sondes de petite taille dans celui-ci.

On connaît également des trappes comprenant un mécanisme pivotant pour recevoir des cartes. Ce type de trappes est décrit par exemple dans les documents US5933328A, US5661634A, US2002149915A1, DE3822848A1 et US1326794A2.

Les trappes selon ces documents sont toutes sous forme d'un réceptacle comprenant une fente d'insertion de cartes. Ces trappes sont capables de pivoter autour un axe horizontal. L'utilisateur doit d'abord soulever la trappe avant d'y insérer une carte. Ce type de trappes présente deux inconvénients : d'une part, il nécessite une opération additionnelle pour insérer une carte, et d'autre part, le mécanisme pivotant est complexe et couteux à la fabrication (il comprend souvent un connecteur indépendant de connexion à la carte) et tend à s'user avec le temps et le nombre d'utilisations effectuées, rendant les connexions avec les cartes défaillantes.

### 3. Résumé de l'invention

Il est donc nécessaire de proposer une solution à cette problématique posée par les terminaux de l'art antérieur. L'invention ne présente pas les inconvénients de l'art antérieur. Plus précisément, l'invention se rapporte à un terminal selon les revendications 1 à 9. Une trappe, destinée à refermer une cavité dudit terminal, comprenant un lecteur de carte à mémoire comprend au moins une fente d'insertion d'une carte à mémoire.

Ainsi, à la différence des trappes et des terminaux de l'art antérieur, il n'est pas nécessaire d'ôter la trappe du terminal pour pouvoir extraire la carte professionnelle. Il suffit de faire glisser la carte en dehors de la fente.

Selon l'invention, ladite fente est obtenue par une différence de hauteur entre un plan de base et un plan d'insertion et ladite fente présente un profil de guidage.

Ainsi, dans ce mode de réalisation, la trappe comprend un plan de base et un plan d'insertion. Globalement, le plan de base est sensiblement parallèle au plan d'insertion et un profil particulier est découpé sur le plan de base au niveau de la fente d'insertion. Le même profil est découpé sur le plan d'insertion. Cela permet de guider la carte lors de son insertion. Selon une caractéristique particulière, ce profil a globalement la forme d'une vague. Ainsi, un guidage est assuré.

Selon l'invention, ladite trappe comprend un plan de base, reproduisant globalement la forme d'une portion de la face postérieure d'un terminal destiné à recevoir ladite trappe et un plan d'insertion, au moins partiellement incliné d'un angle prédéterminé par rapport audit plan de base, ledit plan d'insertion définissant ladite fente d'insertion.

Ainsi, la fente d'insertion est le résultat d'une différence d'inclinaison et/ou de positionnement de deux plans l'un par rapport à l'autre.

Selon une caractéristique particulière, ledit angle d'inclinaison du plan d'insertion par rapport audit plan de base est déterminé en fonction de l'épaisseur de la carte à accueillir dans ladite fente d'insertion et de l'épaisseur dudit plan de base.

Ainsi, l'épaisseur de la fente est juste celle nécessaire à l'introduction de la carte et la différence d'inclinaison permet de guider la carte. En effet, il est nécessaire de garder à l'esprit que la carte introduite dans la fente est destinée à être lue par un dispositif de lecture situé à l'intérieur du terminal. Il est donc important de guider la carte de manière correcte vers ce lecteur. L'inclinaison et/ou le positionnement des deux plans permet notamment de réaliser ce guidage.

Selon une caractéristique particulière, la largeur dudit plan d'insertion est sensiblement égale à la largeur d'une carte à insérer dans un lecteur dudit terminal.

Selon une caractéristique particulière, la longueur dudit plan d'insertion est sensiblement égale à la différence entre la longueur d'une carte à insérer dans un lecteur dudit terminal et la longueur nécessaire à la connexion de ladite carte avec un connecteur de carte à mémoire situé dans ledit terminal.

Ainsi, la carte, une fois insérée dans la trappe, ne dépasse pas de celle-ci.

Selon une caractéristique particulière, la longueur dudit plan d'insertion est inférieure à la différence entre la longueur d'une carte à insérer dans un lecteur dudit terminal et la longueur nécessaire à la connexion de ladite carte avec un connecteur de carte à mémoire situé dans ledit terminal.

Selon une caractéristique particulière, ladite trappe comprend en outre, sur sa face antérieure, une zone de rétention de carte, se présentant sous la forme d'une paroi résultant d'une différence de positionnement entre ledit plan de base et ledit plan d'inclinaison.

Ainsi, cette zone de rétention permet de maintenir la carte en position lorsque celle-ci est insérée dans la fente (et donc dans le lecteur) et permet d'éviter que l'on ne dérobe la carte. Accessoirement, cette zone de rétention est particulièrement utile lorsque la longueur dudit plan d'insertion est légèrement inférieure à la différence entre la longueur d'une carte à insérer dans le lecteur et la longueur nécessaire à la connexion de ladite carte sur avec un connecteur de carte à mémoire situé dans ledit lecteur : la carte est ainsi verrouillée et ne peut être dérobée puisque la tranche de la carte prend appui contre cette zone de rétention.

Selon une caractéristique particulière, ledit plan de base comprend, au niveau de ladite fente F, une ligne de découpe formant une encoche. Cette encoche peut avoir par exemple la forme d'une vague et permet de guider la carte lors de son insertion.

Selon une caractéristique spécifique, ladite trappe comprend en outre, sur sa face antérieure, un évidement d'extraction d'une carte. Ainsi, cet évidement permet de passer le doigt sous la carte, et donc d'échapper à la zone de rétention.

Ainsi, lorsque la carte est en appui sur ladite zone de rétention, cet évidement d'extraction permet d'extraire la carte plus facilement.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une coupe longitudinale d'une représentation simplifiée d'une trappe selon l'invention ;
- La figure 2 est une vue de dessus d'une une représentation simplifiée de la trappe de la figure 1 ;
- La figure 3 est une représentation simplifiée, en trois dimensions, de la trappe de la figure 1 ;
- La figure 4 est une représentation en trois dimensions de la face antérieure ou extérieure de la trappe dans ce mode de réalisation (face postérieure du terminal) ;
- La figure 5 est une vue en pan de la face postérieure ou intérieure de la trappe ;
- La figure 6 est une coupe, selon la section A-A de la figure 5 ;
- La figure 7 est une représentation, en trois dimensions, de la face postérieure du terminal, sur lequel la trappe objet de l'invention est montée ;
- La figure 8 est une vue partiellement éclatée du terminal et de la trappe représentée en figure 7 ;
- La figure 9 est une coupe partielle du même terminal.

### 5. Description détaillée

### 5.1. Rappel du principe de l'invention

L'invention se rapporte à une trappe, qui prend place sur la face postérieure d'un terminal. Cette trappe permet l'insertion d'une carte, plus particulièrement d'une carte professionnelle, dans le terminal. Cette trappe peut avantageusement être montée sur un terminal existant en lieu et place de la trappe existante. Elle permet alors de modifier le terminal à peu de frais et de répondre aux problèmes mentionnés (voir supra). Cette trappe peut aussi être montée sur de nouveaux terminaux. L'objet de cette trappe est d'éviter que le professionnel ne soit obligé de démonter la trappe pour pouvoir insérer et extraire sa carte professionnelle, tout en continuant à offrir des garanties de sécurité quant au retrait de la carte professionnelle par une personne malveillante. La trappe est spécifiquement conçue pour que l'insertion ou le retrait de la carte professionnelle soit aisée lorsque le terminal est retourné (c'est-à-dire lorsque la face postérieure du terminal fait face au professionnel qui souhaite insérer ou retirer la carte).

La trappe est spécifiquement conçue pour que l'insertion ou le retrait de la carte professionnelle soit complexe lorsque le terminal est en position d'utilisation (c'est-à-dire lorsque la face antérieure du terminal fait face à l'utilisateur, tel qu'un patient ou un client, qui souhaite utiliser le terminal pour réaliser une transaction). Pour ce faire, le sens de retrait de la carte est inversé par rapport au sens d'utilisation du terminal, et selon une caractéristique particulière, comprend une butée de rétention. Plus particulièrement, le terminal, en position d'utilisation, fait face à l'utilisateur. Il comprend généralement un écran, un clavier. Il comprend éventuellement un certain nombre de dispositifs de lecture de carte à mémoire (lecteur de carte à puce, lecteur de carte magnétique, lecteur sans contact) pouvant être utilisés pour identifier ou authentifier un utilisateur et/ou réaliser des transactions. En règle générale, un tel terminal est conçu pour être tenu dans une main par l'utilisateur pendant que l'autre main de celui-ci réalise l'opération demandée (par exemple la saisie d'un code pin). Selon l'invention, la trappe est positionnée sous le terminal et elle est conformée pour empêcher l'utilisateur de retirer la carte professionnelle lors de la prise en main du terminal. Dans un mode de réalisation de l'invention, ceci est réalisé en s'assurant que la carte ne puisse être extraite que par un mouvement de translation vers l'arrière du terminal, lequel mouvement est impossible à réaliser par la main qui tient le terminal, bien que cette main soit en partie en contact avec la carte professionnelle. Ce mode de réalisation sera présenté par la suite.

Dans d'autre mode de réalisation, des dispositifs d'occultation (partiel ou non) de la portion de la carte qui est à l'extérieur du terminal peuvent être employés. De tels dispositifs remplissent également la fonction d'empêchement du retrait de la carte. Ils doivent cependant être ajoutés à la trappe, ce qui peut poser des problèmes soit de fabrication, soit de coût. Parmi les dispositifs envisagés, on trouve par exemple des clapets (ou autres dispositifs de fixation adaptés) qui empêchent l'utilisateur de sentir la présence de la carte dans la paume de sa main.

La trappe est donc conçue, de manière générale comme une intersection de deux plans : un plan de base et un plan d'insertion. Le plan d'insertion est incliné par rapport au plan de base. La taille du plan d'insertion est adaptée à la taille de la carte. S'il s'agit d'une carte à puce, la taille du plan d'insertion est adaptée à ce type de carte (par exemple la norme ISO IEC 7816-1). Plus particulièrement, la taille du plan d'insertion est adaptée à la partie de la carte qui n'est pas dans le terminal. Par ailleurs, l'inclinaison du plan d'insertion est calculée d'une part en fonction de la position du lecteur de carte dans le terminal et d'autre part en fonction de l'épaisseur du plan de base, afin de disposer d'une fente d'insertion dont la hauteur est sensiblement égale à l'épaisseur de la carte (par exemple selon la norme ISO IEC 7816-1).

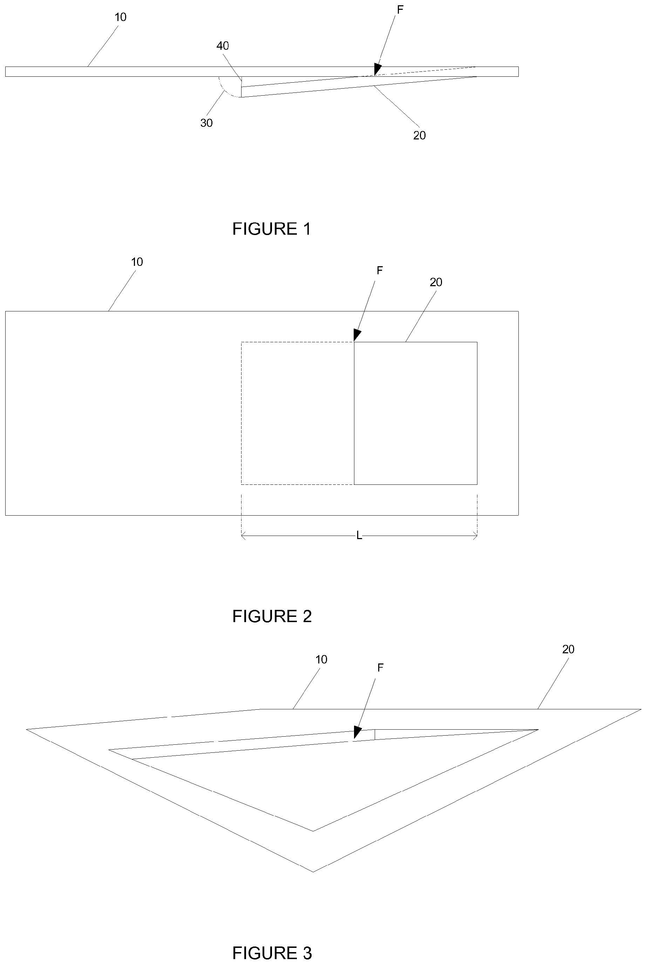

Un schéma d'un mode de réalisation général de la trappe selon l'invention est présenté en relation avec les figures 1, 2 et 3, sur lesquelles seules les caractéristiques précédemment décrites sont reportées (les autres caractéristiques de la trappe tels que les systèmes de fixation, les points de prise en main ne sont pas représentées pour plus de lisibilité). La trappe comprend un plan de base 10, un plan d'insertion 20 (dont la longueur L varie en fonction des modes de réalisation). La partie non visible du plan d'insertion est illustrée en pointillés. Dans certains modes de réalisation, le plan d'insertion ne se prolonge pas sous le plan de base. Le plan d'insertion est incliné par rapport au plan de base d'un angle 30, permettant de définir la hauteur 40 de la fente F, correspondant sensiblement à l'épaisseur de la carte.

### 5.2. Description d'un mode de réalisation

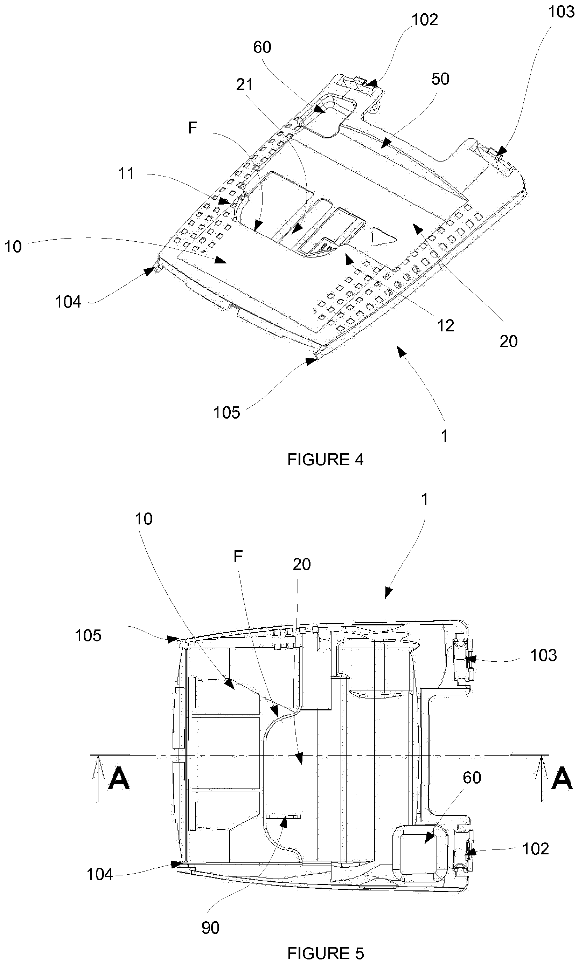

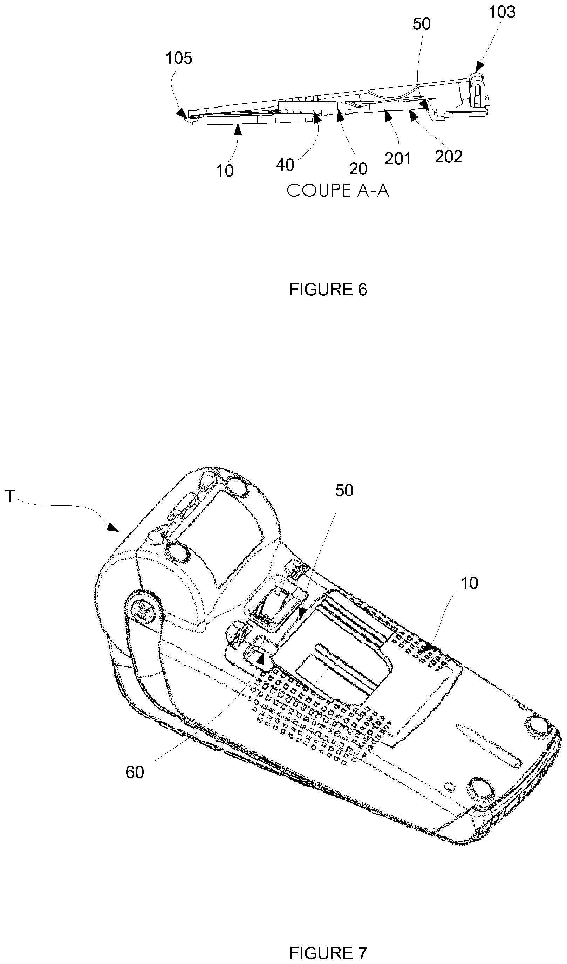

On présente, en relation avec les figures 4 à 9, un mode de réalisation particulier de la trappe objet de l'invention. Sur les figures 4 à 6, la trappe est représentée seule. Sur les figures 7 à 9, la trappe est représentée lorsqu'elle est insérée sur un terminal de paiement.

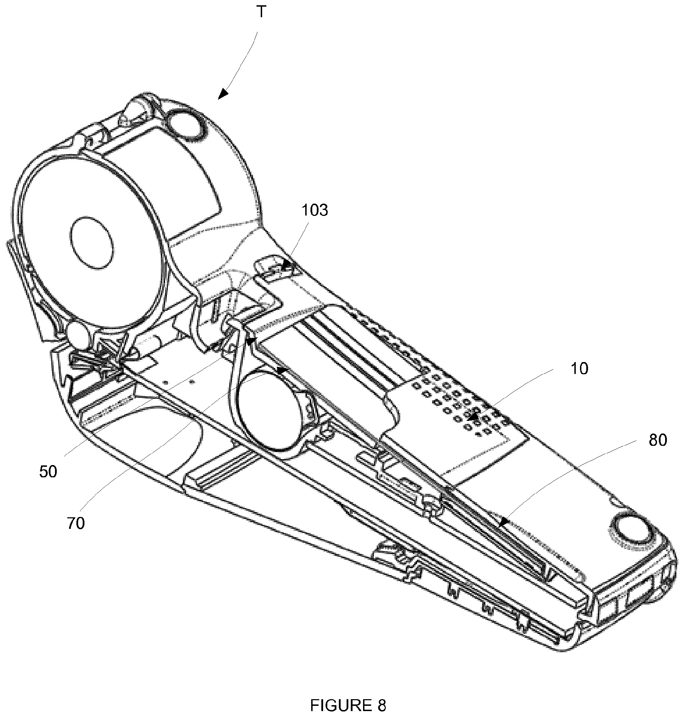

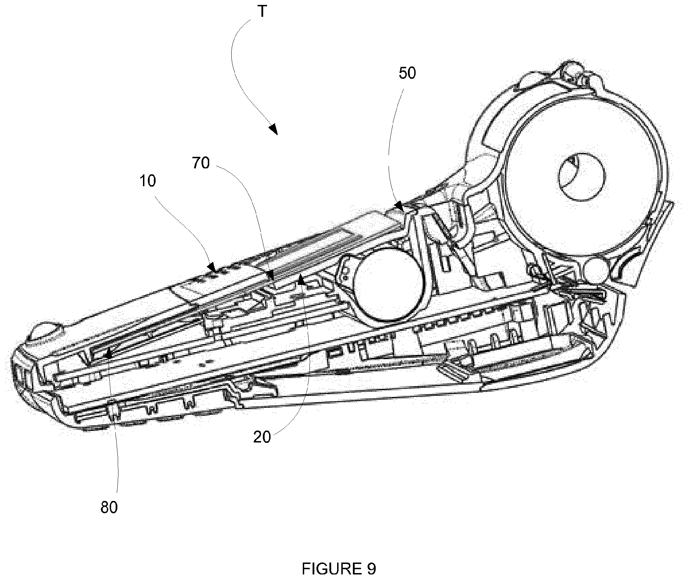

La figure 4 est une représentation en trois dimensions de la face antérieure de la trappe dans ce mode de réalisation. La figure 5 est une vue en pan de la face postérieure ou intérieure de la trappe. La figure 6 est une coupe, selon la section A-A de la figure 5. La figure 7 est une représentation, en trois dimensions, de la face postérieure du terminal, sur lequel la trappe objet de l'invention est montée. La figure 8 est une vue partiellement éclatée du terminal et de la trappe représentée en figure 7. La figure 9 est également une vue partiellement éclatée du terminal et de la trappe représentée en figure.

Les figures 4 à 9 représentent un mode de réalisation de la trappe dans lequel le plan de base 10 est légèrement bombé. La forme bombée du plan de base est adaptée à la forme du terminal T avec lequel la trappe est adjointe. Dans ce mode de réalisation, la trappe 1 comprend deux clips 102, 103 qui permettent de fixer la trappe dans des récepteurs prévus à cet effet dans le terminal T. La trappe comprend également deux tenons 104, 105 qui servent à positionner la trappe dans deux logements correspondant du terminal (non représentés). Comme préalablement explicité, la trappe comprend également un plan d'insertion 20. Ce plan d'insertion est incliné d'un angle donné par rapport au plan de base. Le plan de base définit la fente F d'une hauteur 40 prédéterminée et présentant un profil en forme de vague. Selon l'invention, le plan d'insertion 20 possède une inclinaison variable 201, 202. Cette inclinaison variable, par rapport au plan de base 10, permet, lorsqu'une carte est insérée, d'imprimer à celle-ci une courbure (référence 70, figures 8 et 9), laquelle a pour effet de mettre la carte en tension contre la zone de rétention de carte 50. Dans le mode de réalisation présenté, la zone de rétention de carte est constituée par la paroi de jonction entre le plan de base et le plan d'insertion, comme cela est visible en figure 4. L'inclinaison variable permet également de guider la carte, lors de l'insertion, vers sa destination (qui est le lecteur de carte à puce (référence 80, figures 8 et 9).

Selon l'invention, la trappe intègre également un évidement d'extraction 60. Cet évidement d'extraction, qui se présente sous la forme d'un trou ou d'une récession globalement parallélépipédique, permet, comme cela est représenté par exemple en figure 8, de soulever la carte à puce lorsque cette dernière est insérée dans le lecteur.

Selon l'invention, dans ce mode de réalisation, la forme de découpe de la fente F est également particulière ; Dans ce mode de réalisation, la fente à sensiblement la forme d'une vague. Plus particulièrement, le plan de base comprend, au niveau de ladite fente F, une ligne de découpe formant une encoche et ayant globalement la forme d'une vague. D'autres formes peuvent aussi être adoptées. Cette forme permet d'assurer un guidage optimal de la carte quand elle est insérée dans le lecteur. En effet, comme cela est compris à la lecture de la figure, la carte prend appui sur la partie centrale (21) du plan d'insertion tandis que les extrémités gauche et droite de la carte sont guidées sous le plan de base (par les côtés 11 et 12 du plan de base). Pour assurer que le plan d'insertion ne soit pas déformé par la force exercée lors de l'insertion, la trappe comprend, sous le plan d'insertion, une nervure d'appui 90. Celle-ci vient prendre appui sur un composant ou plusieurs composants ou éléments situés dans le terminal. Comme les tranches gauche et droite de la carte sont guidées, il n'est pas possible d'insérer la carte dans une mauvaise position.

La forme de la fente peut, de manière complémentaire, être définie en fonction d'autres contraintes particulières, qui peuvent par exemple être liées au poids de la pièce (par exemple pour économiser de la matière plastique).

Ainsi, dans ce mode de réalisation de l'invention, il est possible d'une part de fabriquer spécifiquement de terminaux pour qu'ils puissent recevoir une carte professionnelle, mais également de remplacer la trappe de terminaux existants par une nouvelle trappe du type de celle de l'invention.

## Revendications

1. Terminal comprenant :
un lecteur de carte à mémoire ; et
une trappe d'occultation d'une cavité, comprenant :
- une paroi de base (10) reproduisant globalement la forme d'une portion de la face postérieure d'un terminal;
le terminal étant **caractérisé en ce que** ladite trappe d'occultation comprend également
- une paroi d'insertion (20), au moins partiellement inclinée d'un angle prédéterminé (30) par rapport à la paroi de base ;
- au moins une fente (F) d'insertion d'une carte à mémoire obtenue par une différence de hauteur entre la paroi de base (10) et la paroi d'insertion (20), la paroi de base (10) comprenant, à l'extérieur de la paroi d'insertion (20), une ouverture pour un passage de ladite carte à mémoire.

2. Terminal selon la revendication 1, **caractérisé en ce que** ladite fente (F) présente un profil de guidage.

3. Terminal selon la revendication 1, **caractérisé en ce que** ledit angle d'inclinaison (30) de la paroi d'insertion (20) par rapport à la paroi de base (10) est déterminé en fonction de l'épaisseur de la carte à accueillir dans ladite fente d'insertion et de l'épaisseur de la paroi de base (10).

4. Terminal selon l'une quelconque des revendications 1 à 3, **caractérisé en ce que** la largeur de la paroi d'insertion est sensiblement égale à la largeur d'une carte à insérer dans un lecteur dudit terminal.

5. Terminal selon la revendication 1, **caractérisé en ce que** la longueur (L) de la paroi d'insertion est sensiblement égale à la différence entre la longueur d'une carte à insérer dans un lecteur dudit terminal et la longueur nécessaire à la connexion de ladite carte avec un connecteur de carte à mémoire situé dans ledit terminal.

6. Terminal selon la revendication 1, **caractérisé en ce que** la longueur de la paroi d'insertion est inférieure à la différence entre la longueur d'une carte à insérer dans un lecteur dudit terminal et la longueur nécessaire à la connexion de ladite carte avec un connecteur de carte à mémoire situé dans ledit terminal.

7. Terminal selon la revendication 1, **caractérisé en ce que** la trappe comprend en outre, sur sa face antérieure, une zone de rétention de carte, se présentant sous la forme d'une paroi résultant d'une différence de positionnement entre la paroi de base et la paroi d'inclinaison.

8. Terminal selon la revendication 1, **caractérisé en ce que** la trappe comprend en outre, sur sa face antérieure, un évidement d'extraction d'une carte.

9. Terminal selon la revendication 1, **caractérisé en ce que** la paroi de base de la trappe comprend, au niveau de ladite fente F, une ligne de découpe formant une encoche.

## Patentansprüche

1. Endgerät, umfassend:
einen Speicherkartenleser; und
eine Klappe zur Abdeckung eines Hohlraums, umfassend:
- eine Basiswand (10), die global die Form eines Abschnitts der Rückseite eines Endgeräts reproduziert;
Wobei das Endgerät **dadurch gekennzeichnet ist, dass** die Abdeckungsklappe auch umfasst:
- eine Einsetzwand (20), die zumindest teilweise um einen vorbestimmten Winkel (30) zur Basiswand geneigt ist;
- mindestens einen Schlitz (F) zum Einsetzen einer Speicherkarte, der durch einen Höhenunterschied zwischen der Basiswand (10) und der Einsetzwand (20) erhalten wird, wobei die Basiswand (10) außerhalb der Einsetzwand (20) eine Öffnung für eine Durchführung der Speicherkarte umfasst.

2. Endgerät nach Anspruch 1, **dadurch gekennzeichnet, dass** der Schlitz (F) ein Führungsprofil aufweist.

3. Endgerät nach Anspruch 1, **dadurch gekennzeichnet, dass** der Neigungswinkel (30) der Einsetzwand (20) in Bezug zur Basiswand (10) in Abhängigkeit von der Dicke der in dem Schlitz zum Einsetzen aufzunehmenden Karte und der Dicke der Basiswand (10) bestimmt wird.

4. Endgerät nach einem der Ansprüche 1 bis 3, **dadurch gekennzeichnet, dass** die Breite der Einsetzwand im Wesentlichen gleich der Breite einer in einen Leser des Endgeräts einzusetzenden Karte ist.

5. Endgerät nach Anspruch 1, **dadurch gekennzeichnet, dass** die Länge (L) der Einsetzwand im Wesentlichen gleich dem Unterschied zwischen der Länge einer in den Leser des Endgeräts einzusetzenden Karte und der notwendigen Länge für den Anschluss der Karte an einen in dem Endgerät befindlichen Speicherkartenanschluss ist.

6. Endgerät nach Anspruch 1, **dadurch gekennzeichnet, dass** die Länge der Einsetzwand geringer als der Unterschied zwischen der Länge einer in einen Leser des Endgeräts einzusetzenden Karte und der notwendigen Länge für den Anschluss der Karte an einen in dem Endgerät befindlichen Speicherkartenanschluss ist.

7. Endgerät nach Anspruch 1, **dadurch gekennzeichnet, dass** die Klappe ferner auf ihrer Vorderseite eine Kartenhaltezone umfasst, die in Form einer Wand vorhanden ist, die sich aus dem Positionierungsunterschied zwischen der Basiswand und der Neigungswand ergibt.

8. Endgerät nach Anspruch 1, **dadurch gekennzeichnet, dass** die Klappe ferner auf seiner Vorderseite eine Öffnung zur Entnahme einer Karte umfasst.

9. Endgerät nach Anspruch 1, **dadurch gekennzeichnet, dass** die Basiswand der Klappe im Bereich des Schlitzes F eine eine Kerbe bildende Schnittlinie umfasst.

## Claims

1. Terminal comprising;
a memory card reader; and
a flap for concealing a cavity, comprising:
- a base wall (10) generally reproducing the shape of a portion of the rear face of a terminal;
said terminal being **characterized in that** said flap for concealing also comprises:
- an insertion wall (20) at least partially tilted at a predetermined angle (30) relative to said base wall;
- at least one slot (F) for inserting a memory card obtained by a difference in height between a base wall (10) and an insertion wall (20), said base wall comprising outside the insertion wall (20), an opening for the passage of said memory card.

2. Terminal according to claim 1, **characterized in that** said slot (F) has a guiding profile.

3. Terminal according to claim 1, **characterized in that** said angle of tilt (30) of said insertion wall (20) relative to said base wall (10) is determined as a function of the thickness of the card to be received in said insertion slot and the thickness of said base wall (10).

4. Terminal according to any one of the claims 1 to 3, **characterized in that** the width of said insertion wall is generally equal to the width of a card to be inserted into a reader of said terminal.

5. Terminal according to claim1, **characterized in that** the length (L) of said insertion wall is generally equal to the difference between the length of a card to be inserted into a reader of said terminal and the length necessary for connecting said card with a memory card connector situated in said terminal.

6. Terminal according to claim 1, **characterized in that** the length of said insertion wall is smaller than the difference between the length of a card to be inserted into a reader of said terminal and the length necessary for connecting said card with a memory card connector situated in said terminal.

7. Terminal according to claim 1, **characterized in that** said flap furthermore comprises, on its front face, a card retaining zone taking the form of a wall resulting from a difference of positioning between said base wall and said wall of tilt.

8. Terminal according to claim 1, **characterized in that** said flap furthermore comprises, on its front face, a hollow for extracting a card.

9. Terminal according to claim 1, **characterized in that** said base wall of said flap comprises, at said slot F, a cut-out line forming a notch.
